(19) Europäisches Patentamt / European Patent Office / Office européen des brevets

(11) **EP 3 144 284 B1**

(12) **EUROPÄISCHE PATENTSCHRIFT**

(45) Veröffentlichungstag und Bekanntmachung des Hinweises auf die Patenterteilung:
**06.06.2018  Patentblatt 2018/23**

(51) Int Cl.:
*C03C 3/087* (2006.01)   *C03C 4/02* (2006.01)
*C03C 8/02* (2006.01)   *C03C 3/066* (2006.01)
*C03C 8/04* (2006.01)   *C03C 8/06* (2006.01)
*C03C 8/14* (2006.01)   *C03C 8/16* (2006.01)
*C03C 17/00* (2006.01)   *C09D 17/00* (2006.01)

(21) Anmeldenummer: **16001956.8**

(22) Anmeldetag: **08.09.2016**

(54) **GLASURSTABILE STOFFMISCHUNG**

GLAZE STABLE FUEL MIXTURE

COMPOSITION STABLE À LA GLAÇURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.09.2015   DE 102015011750**

(43) Veröffentlichungstag der Anmeldung:
**22.03.2017   Patentblatt 2017/12**

(73) Patentinhaber: **Durst Phototechnik Digital Technology GmbH**
**9900 Lienz (AT)**

(72) Erfinder: **Stehring, Peter**
**9900 Lienz (AT)**

(74) Vertreter: **Kempkens, Anke**
**Kanzlei Kempkens**
**Hofgraben 486**
**86899 Landsberg a. Lech (DE)**

(56) Entgegenhaltungen:
**GB-A- 2 238 549      US-A- 5 336 312**
**US-A1- 2012 027 958**

**Beschreibung**

Die vorliegende Erfindung betrifft eine chemisch stabile Mischung zur Herstellung von daraus gebrannten farbigen Gläsern, wobei die Mischung vor einem Brennvorgang als Komponenten a) Pulverpartikel einer Glasfritte, b) Pulverpartikel eines Pigments auf Basis von nicht modifiziertem Bismutvanadat, welches gegenüber der in geschmolzenem Zustand befindlichen Glasfritte chemisch instabil ist und c) Pulverpartikel von Wolfram(VI)-oxid als Stabilisierungsadditiv, umfasst.

Weiterhin betrifft die Erfindung eine Tinte, die diese Mischung als farbgebende und glasbildende Komponente umfasst. Außerdem betrifft die Erfindung ein Verfahren zur Herstellung eines mit der Tinte gebrannten Glasartikels.

An dieser Stelle sollen vorab einige in diesem Dokument verwendeten Begriffe definiert werden:
Wenn im Rahmen dieser Beschreibung von einem Pigment auf Basis von nicht modifiziertem Bismutvanadat gesprochen wird, so ist damit reines Bismutvanadat ohne eingebauten Fremdatomen zu verstehen, welches eine Scheelit-Struktur aufweist.

Der Begriff "nicht modifiziertes Bismutvanadat" ist als Synonym für den Begriff "Pigment auf Basis von nicht modifiziertem Bismutvanadat" im Kontext zu verstehen.

Das Prozentzeichen "%" wird in der Beschreibung im Sinne von Gewichtsprozenten gebraucht.

Es ist bekannt, dass reines Bismutvanadat ein grünstichiges Gelbpigment (C.I. Pigment Yellow 184) ist, welches alleine, d.h. in atmosphärischer Umgebung jedoch in Abwesenheit von chemisch aggressiven Komponenten, unter thermischer Belastungen bis über 670 °C stabil ist, d.h. dessen Farbwerte sich nicht verändern.

Hingegen weist das Pigment auf Basis von nicht modifiziertem Bismutvanadat eine begrenzte thermische und chemische Stabilität während einem Brennvorgang bei der Verarbeitung mit in geschmolzenem Zustand befindlichen Glasfritten auf (Versuch "Referenz 1", Tabelle T1).

Aus dem Stand der Technik ist bekannt, dass nicht modifiziertes Bismutvanadat bei der Verarbeitung mit in zumindest teilweise flüssigem Zustand befindlichen organischen Lacken, Harzen oder Wachsen chemisch instabil ist. Als geeignete Farbkörper für die Verarbeitung mit solchen Lacken und Kunststoffen haben sich indessen Pigmente auf Basis von modifiziertem Bismutvanadat erwiesen, da diese eine verbesserte Verarbeitungsstabilität gegenüber organischen Komponenten aufweisen.

Die EP 0 492 244 B1 offenbart beispielsweise derartige verarbeitungsstabile Pigmente auf Basis von Bismutvanadat und Zirconium(IV)-oxid zur Einfärbung von Lacken und Kunststoffen, die eine hohe Stabilität gegenüber alkalischem Angriff bzw. bei thermischer Belastung besitzen, wie sie z.B. bei der Einarbeitung der Pigmente in Kunststoffe eine Grundforderung darstellen. Die Herstellung erfolgt indem in einem ersten Schritt aus einer wässrigen Phase zirkoniumhaltige Zwischenprodukte ausgefällt werden, die in einem zweiten Schritt bei einer Temperatur von 400 bis 700 Grad Celsius kalziniert werden, um das zirkoniumhaltige Bismutvanadatpigment zu erhalten. Zum Glühen der Ausgangssubstanzen werden bevorzugt Temperaturen zwischen 250 und 550 Grad Celsius und Zeiten zwischen 0,5 und 16 Stunden eingehalten.

Die EP 0 271 813 B1 bemängelt die begrenzte Anwendbarkeit von Pigmenten auf Basis von Bismutvanadat/molybdat in Anstrichmittel, da die Temperaturstabilität infolge der leichten Reduzierbarkeit des Molybdats und Vanadats durch die organische Matrix für die Verarbeitung im Kunststoff nicht ausreichend ist. Dieses Problem kann laut Dokument gelöst werden, indem auf die Pigmente in wässriger Suspension eine erste (Vorbeschichtung) und zweite (Hauptschicht) Silizium enthaltende Schicht aufgefällt wird. Die erhaltenen Pigmente weisen in Kunststoffen eine deutlich verbesserte thermische Beständigkeit auf.

Zur Verbesserung der Anwendungseigenschaften wie der thermischen und chemischen Stabilität gegenüber Pulverlacke auf Basis von Polyester/Hydroxyalkylamid werden auch Bismutvanadatpigmente mit Schutzhüllen aus Aluminiumphosphaten oder Aluminiumoxiden (WO2006/079616A1) versehen.

Die US 5,336,312 beschreibt farbgebende Komponenten, die zum Beispiel $Bi_2O_3$-, $V_2O_5$- und $WO_3$-Partikel enthalten für die Färbung von Glasuren. Das Problem der begrenzten chemischen Stabilität des Pigments auf Basis von nicht modifiziertem Bismutvanadat bei der Verarbeitung mit Glasfritten, zeigt sich im Farbverlust bzw. der Farbverschiebung, dergestalt, dass nach dem Brennvorgang als Resultat ein Glasartikel erhalten wird, der einen mehr oder weniger ausgeprägten Grünton oder Braunton aufweisen kann oder aber auch farblos sein kann.

Es lässt sich allgemein beobachten, dass eine in geschmolzenem Zustand befindliche Glasfritte in Gegenwart von nicht modifiziertem Bismutvanadat auf das Gesamtsystem eine signifikante gelbanteil-abnehmende Wirkung hat.

Unterschiedliche Faktoren beeinflussen den Einbrennprozess und somit den Farbton des daraus erhaltenen Glasartikels. Hierzu gehören unter anderem die Art - d.h. die Zusammensetzung - der Glasfritte und die Einbrennzeit.

Es lässt sich unter anderem beobachten, dass beim Brennen einer Mischung aus Bismutvanadat und einer Glasfritte die gelbanteil-abnehmende Wirkung der Fritte auf das Gesamtsystem tendenziell umso stärker ausgeprägt ist, je höher der Zinkgehalt der Glasfritte ist.

Der Einsatz von Pigmenten auf Basis von nicht modifiziertem Bismutvanadat in emailtechnischen Anwendungen war demzufolge bisher nicht möglich, ohne deutliche Farbverluste bzw. Farbverschiebungen hinnehmen zu müssen.

Versuch Referenz 1 in Tabelle T1 (nicht erfindungsgemäß), wie bereits erwähnt, zeigt beispielhaft welche Farbverluste bzw. Farbverschiebungen in Kauf genommen werden müssen, wenn das oben genannte Pigment in emailtechnischen Anwendungen zum Einsatz kommt. Bei diesem Versuch wurde eine Tinte umfassend das nicht modifizierte Bismutvanadat in Gegenwart einer Glasfritte als farbgebende und glasbildende Komponenten auf ein Glassubstrat aufgebracht. Anschließend wurde das mit Tinte beschichtete Glassubstrat unter den in Tabelle T1 angegebenen Brennbedingungen gebrannt. Erzeugt wurde dabei ein Glasartikel mit den Lab-Werten: L*= 66,32, a*= -7,11, b*= 49,95.

Der Erfindung lag daher die Aufgabe zugrunde, eine chemisch stabile Mischung bereitzustellen, bei der ein Pigment auf Basis von nicht modifiziertem Bismutvanadat, also als jungfräuliches Pigment direkt mit Glasfritten während eines Brennvorganges verarbeitet werden kann ohne deutliche Farbverluste bzw. Farbverschiebungen hinnehmen zu müssen.

Die Aufgabe wird durch die Bereitstellung einer chemisch stabilen Mischung gemäß Anspruch 1 erfüllt, welche vor einem Brennvorgang als Komponenten a) Pulverpartikel einer Glasfritte, b) Pulverpartikel eines Pigments auf Basis von nicht modifiziertem Bismutvanadat, das gegenüber der im geschmolzenem Zustand befindlichen Glasfritte chemisch instabil ist und c) Pulverpartikel von Wolfram(VI)-oxid als Stabilisierungsadditiv umfasst.

Erfindungsgemäss liegt das Massenverhältnis Glasfritte zu Bismutvanadat in einem Bereich zwischen etwa 1,96:1 und etwa 2:1 und das Massenverhältnis Bismutvanadat zu Wolfram(VI)-oxid in einem Bereich zwischen etwa 18:1 und etwa 1:1, bevorzugt in einem Bereich zwischen etwa 18:1 und etwa 2:1 liegt,

wobei als Glasfritte eine Glasfritte mit Massenverhältnissen umfasst:

| | | |
|---|---|---|
| i) etwa 21,4 bis etwa 36,6 %, | bevorzugt etwa 27,0 bis etwa 31,0 % | $SiO_2$ |
| ii) etwa 05,2 bis etwa 08,9 %, | bevorzugt etwa 06,6 bis etwa 07,6 % | $ZnO$ |
| iii) etwa 60,7 bis etwa 32,7%, | bevorzugt etwa 50,4 bis etwa 43,0 % | $B_2O_3$ |
| iv) etwa 08,5 bis etwa 14,6 %, | bevorzugt etwa 10,8 bis etwa 12,4 % | $Na_2O$ |
| v) etwa 01,1 bis etwa 2,0 %, | bevorzugt etwa 01,5 bis etwa 1,7 % | $TiO_2$ |
| vi) etwa 0,3 bis etwa 0,4 %, | bevorzugt etwa 0,3 bis etwa 0,4 % | $Al_2O_3$ |
| vii) etwa 02,2 bis etwa 03,8 %, | bevorzugt etwa 02,8 bis etwa 03,2 % | F |
| viii) etwa 0,2 bis etwa 0,3 %, | bevorzugt etwa 0,3 % | $CaO$ |
| ix) etwa 0,4 bis etwa 0,6 %, | bevorzugt etwa 0,4 bis etwa 0,5 % | $ZrO_2$. |

Überaschenderweise hat sich erfindungsgemäß gezeigt, dass Wolfram(VI)-oxid während eines Brennvorganges bei Verarbeitung des Pigments b) mit einer in geschmolzenem Zustand befindlichen Glasfritte dem Gesamtsystem eine gelbanteil-abnahme unterdrückende Wirkung verleiht.

Die Unteransprüche beschreiben bevorzugte Varianten der vorliegenden erfinderischen Mischung.

Es wurde außerdem gefunden, dass bereits kleinste Mengen an Wolfram(VI)-oxid, beispielsweise ein Massenverhältnis von nicht modifiziertem Bismutvanadat zu Wolfram(VI)-oxid von etwa 17,9:1 bei einem Massenverhältnis ausgewählter Glasfritten zu Bismutvanadat von etwa 2,4:1, d.h. ein Massenverhältnis von Glasfritte zu Wolframoxid von etwa 43:1, während des Brennvorganges bei der Verarbeitung des Pigments mit der in geschmolzenem Zustand befindlichen Glasfritte dem Gesamtsystem eine signifikante gelbanteil-abnahme unterdrückende Wirkung verleihen kann. Denkbar ist, dass auch größere Massenverhältnisse als 17,9:1 von nicht modifiziertem Bismutvanadat zu Wolfram(VI)-oxid dem Gesamtsystem eine signifikante gelbanteil-abnahme unterdrückende Wirkung verleihen können.

Eine solche Wirkung war umso weniger zu erwarten, zumal das Bismutvanadat von der Glasfritte, die im oben genannten Fall den größten Anteil am Gemisch einnimmt, sozusagen regelrecht umschlossen ist und als primärer Reaktionspartner in Frage kommt, wo hingegen Wolfram(IV)-oxid als Feststoff und/oder als zumindest teilweise gelöste Ionen lediglich in relativ niedrigen Konzentrationen im Gesamtsystem vorliegt.

Obwohl sich der Erfinder nicht auf eine einzige Erklärung oder Theorie festlegen will, wird angenommen, dass der Farbverlust beim Einbrennen von Bismutvanadat ($BiVO_4$) in Glasfritten unter anderem dadurch entsteht, dass sich Bismutvanadat zunächst in der Glasfritte zumindest teilweise löst, sodass der farbgebende Charge-Transfer-Komplex der betroffenen kristallinen Ionenverbindung zerstört wird und in gelöste $Bi^{3+}$ und $V^{5+}$-Ionen übergeht. In Abwesenheit von Wolfram(VI)-oxid reagieren diese Ionen mit Oxiden der Glasfritte und werden beim Abkühlen vermutlich als Mischoxide auskristallisiert, wobei grüne, braune oder aber auch farblose Gläser erhalten werden können. Es wird vermutet, dass demgegenüber in Anwesenheit von Wolfram(VI)-oxid auf Grund der höheren Affinität der Ionen zu Wolfram(VI)-oxid trotz einer beachtlich niedrigeren Konzentration ein Pigment auf Basis eines wolframhaltigen Bismutvanadats produziert wird, wobei die gewünschten gelben Gläser erhalten werden.

Die erfinderischen Mischungen sind besonders für den Einsatz als farbgebender und glasbildender Zusatz in Tinten geeignet, die auf Glassubstrate aufgetragen werden können. Die Aufgabe der vorliegenden Erfindung ist es demnach auch eine Tinte umfassend eine erfinderische Mischung anzugeben.

Diese Aufgabe wird durch eine Tinte nach Anspruch 10 gelöst, die zum Auftragen auf ein Glassubstrat geeignet ist, wobei diese beim Brennvorgang mit dem Glassubstrat zumindest teilweise verschmelzen soll, umfassend A) Pulverpartikel einer Glasfritte, B) eine Flüssigkeit, C) ein Dispergiermittel, wobei die Tinte weiter D) Pulverpartikel eines Pigments und Pulverpartikel eines Stabilisierungsadditivs umfasst, wobei die Komponenten A) und D) der Tinte den Komponenten a) bis c) einer erfinderischen Mischung entsprechen.

Die Unteransprüche beschreiben bevorzugte Varianten der vorliegenden erfinderischen Tinte.

Die Aufgabe zur Herstellung eines Glasartikels wird auch durch das Verfahren nach Anspruch 15 gelöst. Die Unteransprüche beschreiben bevorzugte Varianten des erfinderischen Verfahrens.

Erfindungsgemäß wird ein Verfahren zur Herstellung eines Glasartikels umfassend folgende Schritte realisiert:

I) Bereitstellen eines Glassubstrates
II) Bereitstellen einer erfindungsgemäßen Tinte
III) Auftragen der Tinte auf das Glassubstrat
IV) Brennen der Tinte unter Zufuhr von Wärmeenergie bei einer Temperatur oberhalb der Schmelztemperatur der Glasfritte für eine vorbestimmte Dauer, sodass nach Wiedererstarren der Glasfritte ein farbiger Glasartikel erzeugt wird, der gegenüber einem bei derselben Brenntemperatur und Brenndauer aus einer Mischung ohne Wolfram(VI)-oxid erzeugbaren Glasartikel sowohl einen höheren Gelb- und Grünanteil (+b*, -a*-Wert) als auch einen höheren L*-Wert und Glanzgrad (60°) aufweist.

Außerdem wird die Aufgabe der Erfindung, eine chemisch stabile Mischung für ein Brennvorgang bereitzustellen, durch das Verfahren nach Anspruch 21 gelöst, indem ein Verfahren umfassend folgende Schritte realisiert wird:

i. Breitstellen von getrennt vorliegenden Komponenten einer zu mischenden Mischung, wobei eine erste Komponente Pulverpartikel einer Glasfritte umfasst, eine zweite Komponente Pulverpartikel mit Bismutvanadat umfasst und eine dritte Komponente Pulverpartikel von Wolfram(VI)-oxid umfasst, wobei Glasfritte, Bismutvanadat und Wolfram(VI)-oxid jeweils nur in einer der drei Komponenten umfasst sind,
ii. vor dem Brennen, mischen der ersten zweiten und dritten Komponente.

Wie oben beschrieben umfasst die erfinderische Tinte mehrere Komponenten, auf welche an dieser Stelle näher eingegangen wird.

Die Glasfritte (Komponente A)) ist wie bekannt eine Masse anorganischer Zusammensetzung, meist aus Silikaten und Oxiden bestehend, die beispielsweise auf ein Glassubstrat aufgebracht und bei Temperaturen oberhalb der Schmelztemperatur der Glasfritte und kurzer Brenndauer geschmolzen wird.

Die Flüssigkeit (Komponente B)) dient als Trägervehikel für die übrigen Tintenkomponenten. Pigment und Glasfritte werden darin suspendiert. Als Flüssigkeit werden vorzugsweise organische Lösungsmittel wie beispielsweise Glycole, PM (Propylenglycolmonomethylether), DPM (Dipropylenglycolmonomethylether), TPM (Tripropylenglycolmonomethylether), DBE (Dibasic Ester), PMA (Propylenglycol-1-monoethylester-2-acetat), DPMA (Dipropylenglycol-1-monoethylester-2-acetat), Propylenglycoldiacetat, Cyclohexanon, Propylencarbonat oder einer Mischung davon eingesetzt.

Das Dispergiermittel (Komponente C)) fördert wie bekannt die Pigment-\Glasfrittenbenetzung und -stabilisierung und verhindert so das Auf- und Ausschwimmen sowie das Absetzen der jeweiligen Partikel, wodurch eine hohe Konstanz von Farbort und Farbstärke sowie Frittenort bei Lagerung und Zirkulation erhalten wird. Als Dispergiermittel werden vorzugsweise Dispergiermittel auf Basis von Phosphaten, bevorzugt Polyetherphosphate wie beispielweise TEGO® Dispers 656, TEGO® Dispers 655, TEGO® Dispers 678 oder Mischungen davon eingesetzt.

Der Tinte kann ein Entschäumer beigemengt werden, der die Funktion hat sowohl die Schaumbildung zu verhindern als auch bereits gebildeten Schaum zu zerstören. Als Entschäumer können beispielsweise Siloxane, vorzugsweise organisch modifizierte Siloxane wie beispielsweise TEGO® Foamex 810, TEGO® Foamex 800, TEGO® Foamex 1488, TEGO® Foamex 805 N, TEGO® Foamex 831, TEGO® Foamex 825 oder Mischungen davon zum Einsatz kommen.

Erfindungsgemäß wird eine chemisch stabile Mischung geeignet zur Herstellung von gebrannten farbigen Glasartikeln umfassend vor dem Brennvorgang als Komponente a) Pulverpartikel einer Glasfritte, b) Pulverpartikel eines Pigments auf Basis von nicht modifiziertem Bismutvanadat, das gegenüber der im geschmolzenem Zustand befindlichen Glasfritte chemisch instabil ist, c) Pulverpartikel von Wolfram(VI)-oxid als Stabilisierungsadditiv, bereitgestellt, wobei das Massenverhältnis Glasfritte zu Bismutvanadat in einem Bereich zwischen etwa 1,96:1 und etwa 2:1 und das Massenverhältnis Bismutvanadat zu Wolfram(VI)-oxid in einem Bereich zwischen etwa 18:1 und etwa 1:1, bevorzugt in einem Bereich zwischen etwa 18:1 und etwa 2:1 liegt, und wobei als Glasfritte eine Glasfritte mit Massenverhältnissen umfasst:

| i) etwa 21,4 bis etwa 36,6 %, | bevorzugt etwa 27,0 bis etwa 31,0 % | $SiO_2$ |
|---|---|---|
| ii) etwa 05,2 bis etwa 08,9 %, | bevorzugt etwa 06,6 bis etwa 07,6 % | $ZnO$ |
| iii) etwa 60,7 bis etwa 32,7%, | bevorzugt etwa 50,4 bis etwa 43,0 % | $B_2O_3$ |
| iv) etwa 08,5 bis etwa 14,6 %, | bevorzugt etwa 10,8 bis etwa 12,4 % | $Na_2O$ |
| v) etwa 01,1 bis etwa 2,0 %, | bevorzugt etwa 01,5 bis etwa 1,7 % | $TiO_2$ |
| vi) etwa 0,3 bis etwa 0,4 %, | bevorzugt etwa 0,3 bis etwa 0,4 % | $Al_2O_3$ |
| vii) etwa 02,2 bis etwa 03,8 %, | bevorzugt etwa 02,8 bis etwa 03,2 % | F |
| viii) etwa 0,2 bis etwa 0,3 %, | bevorzugt etwa 0,3 % | $CaO$ |
| ix) etwa 0,4 bis etwa 0,6 %, | bevorzugt etwa 0,4 bis etwa 0,5 % | $ZrO_2$. |

Dabei hat sich wie oben bereits dargelegt überraschenderweise gezeigt, dass Wolfram(VI)-oxid während eines Brennvorganges bei der Verarbeitung des Pigments b) mit der in geschmolzenem Zustand befindlichen Glasfritte dem Gesamtsystem eine gelbanteil-abnahme unterdrückende Wirkung verleiht.

Durch Aussetzung der Mischung auf Brenntemperaturen über der Schmelztemperatur der Glasfritte ist vorzugsweise ein farbiges Glas erzeugbar, das gegenüber einem bei derselben Brenntemperatur und Brenndauer aus einer Mischung ohne Wolfram(VI)-oxid erzeugbares Glas sowohl einen höheren Gelb- und Grünanteil (+b*, -a*-Wert) als auch einen höheren L*-Wert und Glanzgrad (60°) aufweist.

Festzuhalten ist, dass der etwas höhere Grünanteil des erfinderischen Glases zwar nicht ausdrücklich erwünscht, aber auch nicht als störend, was den Farbton des Glases anbelangt, wahrgenommen wird.

Die bereitgestellten Mischungen umfassen vorzugsweise

a) Pulverpartikel der Glasfritte, deren mittlerer Partikeldurchmesser $d_{0,5}$ vorzugsweise unter 1 $\mu$m liegt, besonders bevorzugt im Bereich 500-800 nm,
b) Pulverpartikel des Pigments, dessen mittlerer Partikeldurchmesser $d_{0,5}$ vorzugsweise unter 1 $\mu$m liegt, besonders bevorzugt im Bereich 200-600 nm,
c) Pulverpartikel des Stabilisierungsadditivs, dessen mittlerer Partikeldurchmesser $d_{0,5}$ unter 1 $\mu$m liegt, besonders bevorzugt im Bereich 200-600 nm.

In einer bevorzugten Ausführungsform umfasst das Stabilisierungsadditiv a) Wolfram(VI)-Oxid und zusätzlich b) $Bi_2O_3$.

Eine bevorzugte Mischung umfasst vorzugsweise eine Glasfritte auf Basis von Silizium, Bor und Zink.

In einer bevorzugten Ausführungsform der Mischung wird als Glasfritte eine Glasfritte umfassend

| i) etwa 21,4 bis etwa 36,6 %, | bevorzugt etwa 27,0 bis etwa 31,0 % | $SiO_2$ |
|---|---|---|
| ii) etwa 05,2 bis etwa 08,9 %, | bevorzugt etwa 06,6 bis etwa 07,6 % | $ZnO$ |
| iii) etwa 60,7 bis etwa 32,7%, | bevorzugt etwa 50,4 bis etwa 43,0 % | $B_2O_3$ |
| iv) etwa 08,5 bis etwa 14,6 %, | bevorzugt etwa 10,8 bis etwa 12,4 % | $Na_2O$ |
| v) etwa 01,1 bis etwa 2,0 %, | bevorzugt etwa 01,5 bis etwa 1,7 % | $TiO_2$ |
| vi) etwa 0,3 bis etwa 0,4 %, | bevorzugt etwa 0,3 bis etwa 0,4 % | $Al_2O_3$ |
| vii) etwa 02,2 bis etwa 03,8 %, | bevorzugt etwa 02,8 bis etwa 03,2 % | F |
| viii) etwa 0,2 bis etwa 0,3 %, | bevorzugt etwa 0,3 % | $CaO$ |
| ix) etwa 0,4 bis etwa 0,6 %, | bevorzugt etwa 0,4 bis etwa 0,5 % | $ZrO_2$, |

bereitgestellt, wobei besonders bevorzugt als Glasfritte die Glasfritte mit der Bezeichnung VPA-21102 bereitgestellt wird.

Die Glasfritte weist vorzugsweise einen Schmelzbereich zwischen etwa 550 und etwa 750°C, vorzugsweise zwischen 600 und 640°C auf.

Die Glasfritte VPA-21102 ist eine bei der Fa. Colorobbia erhältliche niedrigschmelzende Glasfritte mit einem Schmelzbereich zwischen 600 und 640 °C.

Gemäß einer besonders bevorzugten Ausführungsform wird anstatt eines Pigments auf Basis von nicht modifiziertem Bismutvanadat, ein Pigment auf Basis von nicht modifiziertem Bismutvanadat mit einem Funktionalisierungs-Agens bereitgestellt.

Ein derartiges Pigment ist beispielsweise Durovan 5501 der Habich GmbH. Das Funktionalisierungs-Agens hat dabei die Funktion das Pigmentpartikel in ausgewählten Flüssigkeiten zu dispergieren bzw. zu stabilisieren. Es gibt zwei Arten von Mechanismen für die Stabilisierung einer Pigmentpartikel-Dispersion. Elektrostatische Stabilisierung erfolgt wenn zwei Pigmentpartikel dieselbe Ladung besitzen, die zueinander eine abstoßende Kraft ausüben. Pigmentpartikel sind in diesem Fall mit einem geladenen Funktionalisierungs-Agens umhüllt. Sterische Stabilisierung erfolgt hingegen wenn Pigmentpartikel mit einem Polymer umhüllt sind. In ausgewählten Flüssigkeiten erfolgen dabei starke Wechselwirkungen zwischen Polymer und Pigmentpartikel, sodass verhindert wird, dass diese sich zu sehr annähern und agglomerieren. Das Funktionalisierungs-Agens und das Dispergiermittel haben im Prinzip denselben Zweck.

Erfindungsgemäß wird auch eine Tinte zum Bedrucken eines Glassubstrates, die beim Brennvorgang mit dem Glassubstrat zumindest teilweise verschmelzen soll angegeben, die A) Pulverpartikel einer Glasfritte, B) eine Flüssigkeit, C) ein Dispergiermittel umfasst, wobei die Tinte weiter D) Pulverpartikel eines Pigments und Pulverpartikel eines Stabilisierungsadditivs umfasst, wobei die Komponenten A) und D) den Komponenten a) bis c) einer erfinderische Mischung entsprechen.

Die Tinte umfasst vorzugsweise einen Entschäumer, besonders bevorzugt einen Entschäumer auf Siloxan-Basis.

Die Tinte kann eine Tintenstrahldrucktinte sein. Bei einer Tintenstrahldrucktinte gilt bevorzugt, dass diese eine Viskosität in einem Bereich zwischen etwa 9 bis etwa 20 mPa·s, bevorzugter etwa 10 bis etwa 13 mPa·s bei einer Temperatur von etwa 35 °C, und eine Dichte in einem Bereich zwischen etwa 1,3 bis etwa 1,7 g/cm$^3$ aufweist.

Eine bevorzugte Ausführungsform der Tinte umfasst

a) etwa 26 bis etwa 32 % Glasfritte, besonders bevorzugt etwa 29 bis etwa 30 %,
b) etwa 38 bis etwa 48 % einer Flüssigkeit, besonders bevorzugt einer organischen Flüssigkeit
c) etwa 2 bis etwa 10 %Dispergiermittel, bevorzugt 8 bis 10 % eines Dispergiermittels, besonders bevorzugt ein Dispergiermittel auf Basis von Polyetherphosphat
d) etwa 13 bis etwa 15 % Pigment,
e) etwa 0,8 bis etwa 13 % Stabilisierungsadditiv, besonders bevorzugt etwa 0,8 bis etwa 7 % Stabilisierungsadditiv

Die Flüssigkeit umfasst vorzugsweise folgende Komponenten:

a) etwa 1,37 bis etwa 1,53 % Dipropylenglycolmonomethylether,
b) etwa 16 bis etwa 27 % DBE und
c) etwa 18 bis etwa 20 % Propylenglycol-1-monomethylether-2-acetat.

In mehreren Testreihen (T1 bis T3) wurde untersucht bei welchen Mengenverhältnissen der Mischungskomponenten die gewünschten gelben Farbtöne erhalten werden können.

Bei den Testreihen wurde eine Tinte entsprechend einem bevorzugten erfindungsgemäßen Verfahren zunächst auf ein Floatglas-Substrat entweder gerakelt oder mittels eines Tintenstrahldruckers gedruckt. Im darauffolgenden Schritt wurde die Tinte unter vorbestimmten Bedingungen, d.h. Brenntemperatur und Brennzeit, auf das Floatglas-Substrat eingebrannt und der Farbton des erhaltenen Glasartikels spektrometrisch ermittelt.

Farbe und Helligkeit der erhaltenen Glasartikel wurden mit Hilfe der LAB-Werte charakterisiert. Die Bestimmung der Werte erfolgte mit einem Spektrometer. Der L*-Wert beschreibt die Helligkeit des Glasartikels. Der Wert L* gleich 100 entspricht der höchsten Helligkeit also dem idealen Weiß, L* gleich 0 bedeutet schwarz. Mit +a* wird der Rotanteil, mit -a* der Grünanteil bezeichnet. Der +b*-Wert beschreibt den Gelbanteil, der -b*-Wert den Blauanteil.

Die Messungen wurden mit dem Spektrometer der Firma Datacolor vom Typ Datacolor650™ mit den nachstehenden angeführten Einstellungen durchgeführt:

• Blende: SAV (9 mm)

• ohne Filter (d. h. incl UV)

• mit Glanz

• Glaskompensation

• Lichtart: Normlicht D65 10°-Beobachter

Nachdem das benutzte Substrat aus Glas besteht und die darauf eingebrannte Mischung einen Teil des bei der Messung verwendeten Lichtes durchlässt, ist eine Glaskompensation notwendig, um eine Fälschung der ermittelten Farbwerte zu verhindern. Bei der Glaskompensation erfolgt die Nullkalibration bekanntlich bei weißem Hintergrund und einem leeren, d.h. unbeschichteten, Floatglas-Substrat.

Die Erfindung soll nun anhand der Testreihe T1, Versuche 1-12 sowie 5a und 5b, näher erläutert werden:

In Testreihe T1 wurden Beispielversuche mit einer besonders bevorzugten Mischung der Glasfritte VPA-21102 von der Fa. Colorobbia durchgeführt.

Die Versuche 1-9 in Testreihe T1 wurden mit im Wesentlichen konstantem Glasfritten-Anteil und konstantem Massenverhältnis Glasfritte zu Bismutvanadat, aber variablem Massenverhältnis von Bismutvanadat zu Wolfram(VI)-oxid durchgeführt, sodass überprüft werden konnte wie sich unterschiedliche Massenverhältnisse von Pigment zu Stabilisator auf die Farb- und Glanzwerte der erhaltenen Glasartikel auswirken.

Das folgende Versuchsbeispiel soll die Herstellung einer bevorzugten Ausführungsform der erfindungsgemäßen Tinte sowie die Durchführung eines bevorzugten erfindungsgemäßen Verfahrens zur Herstellung eines Glasartikels näher erläutern, ohne dass darin jedoch eine Einschränkung zu sehen ist

Versuch 1:

❖ Herstellung der Tinte

7,89 g Tego Dispers 656 wird in einer Mischung aus 1,53 g DPM (Dipropylenglycolmonomethylether), 27,05 g DBE Dibasic Ester (handelsübliche Mischung aus Bernstein-, Glutar- und Adipinsäuredimethylester) und 18,25 g PMA (2-Methoxy-1-methylethylacetat) gelöst. Anschließend werden darin 0,84 g Wolfram(VI)-oxid, 15,01 g Bismutvanadat und 29,43 g der Glasfritte VPA-21102 dispergiert.

Die mittleren Partikelgrößen der dispergierten Bestandteile sind wie folgt:

$WO_3$: d(0,5) = 0,121 $\mu$m
$BiVO_4$: d(0,5) = 0,496 $\mu$m
Glasfritte VP-21102: d(0,5) = 0,791 $\mu$m

❖ Herstellung des farbigen Glasartikels

Die Tinte wird auf ein Floatglas-Substrat bei einer Nassfilmdicke der Suspension von 40 $\mu$m gerakelt. Anschließend erfolgt das Einbrennen der Tinte auf das Floatglas-Substrat innerhalb von 4 Minuten bei 670 °C in einem Muffelofen des Typs L3/11 von Nabertherm (oder einem ESG-Ofen).

Alle weiteren Versuche (2-32) wurden entsprechend der Vorgehensweise nach Versuch 1 durchgeführt, wobei die Zusammensetzung der jeweiligen Tinte sowie die restlichen Brennbedingungen, wie Brenndauer und Brenntemperatur, die sich von Versuch 1 unterscheiden können, aus den Tabellen T1-T3 zu entnehmen sind.

Bei den Versuchen 1-11 aus Tabelle T1 wurde festgestellt, dass das Massenverhältnis der Glasfritte VPA-21102 zu Bismutvanadat vorzugsweise in einem Bereich zwischen etwa 1,96:1 und etwa 2,4:1 (Versuche 1-11), insbesondere in einem Bereich von etwa 1,96 (Versuche 1-7) und das Massenverhältnis Bismutvanadat zu Wolfram(VI)-oxid in einem Bereich zwischen etwa 17,8:1 und etwa 1,06:1 (Versuche 1-11), insbesondere in einem Bereich zwischen etwa 17,8:1 und etwa 1,73:1 (Versuche 1-7) liegt.

Hingegen zeigt ein Massenverhältnis der Glasfritte VPA-21102 zu Bismutvanadat von etwa 3,58 und ein Massenverhältnis von Bismutvanadat zu Wolfram(VI)-oxid von etwa 2,96 (Versuch 12), dass die gelbanteil-abnahme unterdrückende Wirkung von Wolfram(VI)-oxid nachlässt und sich der Farbton des Glasartikels deutlich verschlechtert (L* = 71,33; a* = -12,96; b* = 67,97).

Massenverhältisse der Glasfritte VPA-21102 zu Bismutvanadat von etwa 1,96 und Massenverhältnisse von Bismutvanadat zu Wolfram(VI)-oxid von etwa 1,06 bis etwa 1,19 weisen zwar gute Lab-Farbwerte auf (Versuch 8: L* = 81,39; a* = -14,52; b* = 84,34; Versuch 9: L* = 80,36; a* = -14,8; b* = 80,6), jedoch wurden lediglich niedrige Glanzgrade (60°) bei den gebrannten Glasartikeln erhalten (Versuch 8: 58,4; Versuch 9: 46,5).

In Testreihe T2 (Versuche 13-22) und T3 (Versuche 26-30) wurden unterschiedliche Oxid- und Sulfat-Additive aus der Gruppe bestehend aus $Bi_2O_3$, $Al_2O_3$, $BaSO_4$, $ZrO_2$ auf Ihre potentielle gelbanteil-abnehmende unterdrückende Wirkung während dem Brennvorgang bei Verarbeitung des Pigments b) mit der in geschmolzenem Zustand befindlichen Glasfritte, die sie dem Gesamtsystem verleiht, untersucht.

Es wurde festgestellt, dass durch Auswahl eines einzigen Oxides oder Sulfates aus der genannten Gruppe, Glasartikel mit deutlich schlechteren Lab-Werten, d.h. insbesondere niedrigere b*-Werte, erhalten wurden, als wenn Wolfram(VI)-oxid zum Einsatz kommt. Die Lab-Werte der daraus erhaltenen Glasartikel sind: L* < 79,94; a* $\geq$ -11,4; b* < 69,4.

In Testreihe T3 wurden die Versuche mit den Nr. 23-25 durchgeführt, bei denen Mischungen von Wolfram(VI)-oxid und zusätzlich b) $Bi_2O_3$ in unterschiedlichen Verhältnissen untersucht wurden. Es wurde beobachtet, dass bei Massenverhältnissen der Glasfritte VPA-21102 zu Bismutvanadat von etwa 1,96 und Massenverhältnissen von $Bi_2O_3$ zu Wolfram(VI)-oxid von >3,9 Glasartikel mit sehr niedrigem Gelbanteil erhalten werden (Versuch 23: L* = 72,41; a* = 0,1; b* = 49,44; Versuch 24: L* = 72,23; a* = -1,66; b* = 59,99).

Es wird somit festgestellt, dass die Beimengung von $Bi_2O_3$ zum eigentlichen Stabilisierungsadditiv Wolfram(VI)-oxid die gelbanteil-abnahme unterdrückende Wirkung von Wolfram(VI)-oxid bei bestimmten Mischungsverhältnissen hemmen kann.

Lediglich Versuch Nr. 25, bei dem eine Mischung von Wolfram(VI)-oxid und zusätzlich b) $Bi_2O_3$ in einem Massenverhältnis von ungefähr 1:1 verwendet wurde, konnte ein Glasartikel mit gegenüber den Versuchen 25 und 26 höherem Gelbanteil von b* = 82,92 erhalten werden.

Erfindungsgemäß wird auch ein Verfahren zur Herstellung eines Glasartikels realisiert, der folgende Schritte umfasst:

I) Bereitstellen eines Glassubstrates
II) Bereitstellen einer erfindungsgemäßen Tinte
III) Auftragen der Tinte auf das Glassubstrat
IV) Brennen der Tinte unter Zufuhr von Wärmeenergie bei einer Temperatur oberhalb der Schmelztemperatur der Glasfritte für eine vorbestimmte Dauer, sodass nach Wiedererstarren der Glasfritte ein farbiger Glasartikel erzeugt wird, der gegenüber einem bei derselben Brenntemperatur und Brenndauer aus einer Mischung ohne Wolfram(VI)-oxid erzeugbaren Glasartikel sowohl einen höheren Gelb- und Grünanteil (+b*, -a*-Wert) als auch einen höheren L*-Wert und Glanzgrad (60°) aufweist.

Der Auftrag in Schritt III) kann mittels einer Rakelvorrichtung oder eines Tintenstrahldruckers erfolgen.

Untersucht wurde in der Testreihe T1 (Versuche 5a, 5b, 2a) wie eine Erhöhung der Brenndauer sich auf die Farbwerte der erhaltenen Glasartikel auswirkt. Dabei hat sich gezeigt, dass eine Erhöhung der Brenndauer von 4 auf 12 Minuten beim einer Mischung gemäß Versuch 5 dazu führt, dass der Gelbanteil im Glasartikel deutlich reduziert wird und zwar von b* = 89,16 (4 Minuten) auf b* = 61,39 (12 Minuten). Eine weitere Erhöhung der Brenndauer auf insgesamt 30 Minuten führt hingegen nicht zu einer weiteren Reduktion des Gelbanteils (b* = 63,31).

Es wird vermutet, dass Allgemein beim Überschreiten eines bestimmten ersten Brenndauer-Grenzwertes der b*-Wert des erhaltenen Glasartikels sukzessive abnimmt und ab einem zweiten Brenndauer-Grenzwert in etwa unverändert bleibt. Ein Fachmann hat die Möglichkeit diese Brenndauer-Grenzwerte zu bestimmen, indem Er beispielsweise eine Testreihe für die jeweils ausgewählte Glasfritte durchführt.

Gemäß einer bevorzugten Ausgestaltung des Verfahrens wird in Schritt IV) die Tinte bei einer Brenntemperatur von 670 °C und einer Brenndauer von 4 Minuten gebrannt.

In einer weiteren bevorzugten Ausgestaltung des Verfahrens wird eine Mischung mit einem Massenverhältnis einer Glasfritte umfassend

| | | | |
|---|---|---|---|
| i) etwa 21,4 bis etwa 36,6 %, | bevorzugt etwa 27,0 bis etwa 31,0 % | $SiO_2$ |
| ii) etwa 05,2 bis etwa 08,9 %, | bevorzugt etwa 06,6 bis etwa 07,6 % | ZnO |
| iii) etwa 60,7 bis etwa 32,7%, | bevorzugt etwa 50,4 bis etwa 43,0 % | $B_2O_3$ |
| iv) etwa 08,5 bis etwa 14,6 %, | bevorzugt etwa 10,8 bis etwa 12,4 % | $Na_2O$ |
| v) etwa 01,1 bis etwa 2,0 %, | bevorzugt etwa 01,5 bis etwa 1,7 % | $TiO_2$ |
| vi) etwa 0,3 bis etwa 0,4 %, | bevorzugt etwa 0,3 bis etwa 0,4 % | $Al_2O_3$ |
| vii) etwa 02,2 bis etwa 03,8 %, | bevorzugt etwa 02,8 bis etwa 03,2 % | F |
| viii) etwa 0,2 bis etwa 0,3 %, | bevorzugt etwa 0,3 % | CaO |
| ix) etwa 0,4 bis etwa 0,6 %, | bevorzugt etwa 0,4 bis etwa 0,5 % | $ZrO_2$, |

zu Bismutvanadat von etwa 2:1 und Bismutvanadat zu Wolfram(VI)-oxid von etwa 17,9:1 bis zu etwa 1,06:1 bereitgestellt, wobei nach Schritt IV) ein Glasartikel erzeugt wird, der gegenüber ein aus einer Tinte ohne Stabilisierungsadditiv erzeugbares Glasartikel einen Farbunterschied ΔE* von etwa >35 und <44 und gleichzeitig einen Glanzwertunterschied (60°) von etwa >42 und <108,6 aufweist.

Glasartikel wurden dabei erhalten, die Lab-Werte L*, a*, b* in den Bereichen L* = etwa 79% bis etwa 81%, a* = etwa -13,5 bis etwa 15,2; b*= etwa 80,6 bis etwa 91 (Lichtart D65 10°) und gleichzeitig einen Glanzwert (60°) im Bereich von etwa 46,5 bis etwa 113 aufweisen.

Der Farbunterschied ($\Delta E_{CIE1976}$) zwischen zwei Lab-Farbwerte wird nach der folgenden Formel berechnet:

$$\Delta E_{CIE1976} = \sqrt{(L_1^* - L_2^*)^2 + (a_1^* - a_2^*)^2 + (b_1^* - b_2^*)^2}$$

In einer besonders bevorzugten Ausgestaltung des Verfahrens wird eine Mischung mit Massenverhältnis der Glasfritte umfassend

| | | |
|---|---|---|
| i) etwa 21,4 bis etwa 36,6 %, | bevorzugt etwa 27,0 bis etwa 31,0 % | SiO$_2$ |
| i) etwa 21,4 bis etwa 36,6 %, | bevorzugt etwa 27,0 bis etwa 31,0 % | SiO$_2$ |
| ii) etwa 05,2 bis etwa 08,9 %, | bevorzugt etwa 06,6 bis etwa 07,6 % | ZnO |
| iii) etwa 60,7 bis etwa 32,7%, | bevorzugt etwa 50,4 bis etwa 43,0 % | B$_2$O$_3$ |
| iv) etwa 08,5 bis etwa 14,6 %, | bevorzugt etwa 10,8 bis etwa 12,4 % | Na$_2$O |
| v) etwa 01,1 bis etwa 2,0 %, | bevorzugt etwa 01,5 bis etwa 1,7 % | TiO$_2$ |
| vi) etwa 0,3 bis etwa 0,4 %, | bevorzugt etwa 0,3 bis etwa 0,4 % | Al$_2$O$_3$ |
| vii) etwa 02,2 bis etwa 03,8 %, | bevorzugt etwa 02,8 bis etwa 03,2 % | F |
| viii) etwa 0,2 bis etwa 0,3 %, | bevorzugt etwa 0,3 % | CaO |
| ix) etwa 0,4 bis etwa 0,6 %, | bevorzugt etwa 0,4 bis etwa 0,5 % | ZrO$_2$, |

zu Bismutvanadat von etwa 2:1 und Bismutvanadat zu Wolfram(VI)-oxid von etwa 17,9:1 bis zu etwa 2:1 bereitgestellt wird, wobei nach Schritt c) ein Glasartikel erzeugt wird, der gegenüber ein aus einer Mischung ohne Stabilisierungsadditiv erzeugbares Glasartikel eine Farbunterschied ∆E* von etwa >40 bis etwa <44 aufweist und gleichzeitig einen Glanzwertunterschied (60°) von etwa >104 und <108,6 aufweist.

Leuchtend gelbe Glasartikel wurden dabei erhalten, deren Lab-Werte L*, a*, b* in den Bereichen L* = etwa 80% bis 81%, a* = -13,5 bis 15,2; b* = 86 bis 91 (Lichtart D65 10°) und gleichzeitig einen Glanzwert (60°) in den Bereichen 109 bis 113 aufweisen.

Die Herstellung einer erfindungsgemässen chemisch stabilen Mischung für ein Brennverfahren erfolgt mit dem erfindungsgemässen Verfahren umfassend die Schritte:

- Breitstellen von getrennt vorliegenden Komponenten einer zu mischenden Mischung, wobei eine erste Komponente Pulverpartikel einer Glasfritte umfasst, eine zweite Komponente ein Pulverpartikel mit Bismutvanadat umfasst und eine dritte Komponente Pulverpartikel von Wolfram(VI)-oxid umfasst, wobei Glasfritte, Bismutvanadat und Wolfram(VI)-oxid jeweils nur in einer der drei Komponenten umfasst sind.

- vor dem Brennen, mischen der ersten, zweiten und dritten Komponente.


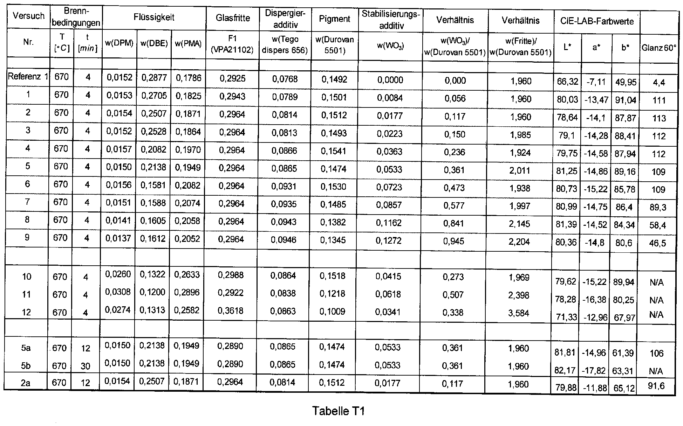

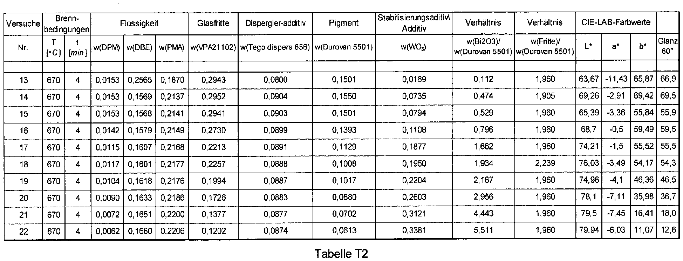

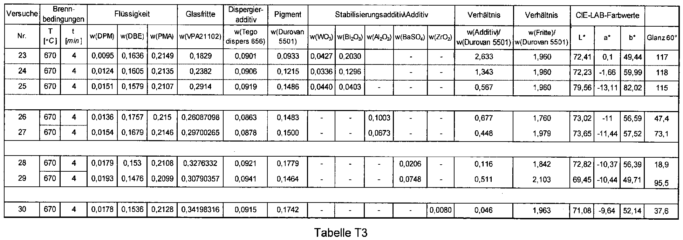

## Patentansprüche

1. Chemisch stabile Mischung geeignet zur Herstellung von gebrannten farbigen Gläsern umfassend vor einem Brennvorgang als Komponenten:

   a) Pulverpartikel einer Glasfritte
   b) Pulverpartikel eines Pigments auf Basis von nicht modifiziertem Bismutvanadat, das gegenüber der im geschmolzenem Zustand befindlichen Glasfritte chemisch instabil ist,
   c) Pulverpartikel von Wolfram(VI)-oxid als Stabilisierungsadditiv,

   wobei das Massenverhältnis Glasfritte zu Bismutvanadat in einem Bereich zwischen etwa 1,96:1 und etwa 2:1 liegt und das Massenverhältnis Bismutvanadat zu Wolfram(VI)-oxid in einem Bereich zwischen etwa 18:1 und etwa 1:1, bevorzugt in einem Bereich zwischen etwa 18:1 und etwa 2:1 liegt, wobei als Glasfritte eine Glasfritte mit Massenverhältnissen umfasst:

| | | |
|---|---|---|
| i) etwa 21,4 bis etwa 36,6 %, | bevorzugt etwa 27,0 bis etwa 31,0 % | SiO$_2$ |
| ii) etwa 05,2 bis etwa 08,9 %, | bevorzugt etwa 06,6 bis etwa 07,6 % | ZnO |
| iii) etwa 60,7 bis etwa 32,7%, | bevorzugt etwa 50,4 bis etwa 43,0 % | B$_2$O$_3$ |
| iv) etwa 08,5 bis etwa 14,6 %, | bevorzugt etwa 10,8 bis etwa 12,4 % | Na$_2$O |
| v) etwa 01,1 bis etwa 2,0 %, | bevorzugt etwa 01,5 bis etwa 1,7 % | TiO$_2$ |
| vi) etwa 0,3 bis etwa 0,4 %, | bevorzugt etwa 0,3 bis etwa 0,4 % | Al$_2$O$_3$ |
| vii) etwa 02,2 bis etwa 03,8 %, | bevorzugt etwa 02,8 bis etwa 03,2 % | F |
| viii) etwa 0,2 bis etwa 0,3 %, | bevorzugt etwa 0,3 % | CaO |
| ix) etwa 0,4 bis etwa 0,6 %, | bevorzugt etwa 0,4 bis etwa 0,5 % | ZrO$_2$. |

**2.** Mischung nach Anspruch 1 **dadurch gekennzeichnet ist, dass** durch Aussetzung der Mischung auf Brenntemperaturen über der Schmelztemperatur der Glasfritte ein farbiges Glas erzeugbar ist, das gegenüber einem bei derselben Brenntemperatur und Brenndauer aus einer Mischung ohne Wolfram(VI)-oxid erzeugbares Glas sowohl einen höheren Gelb- und Grünanteil (+b*, -a*-Wert) als auch einen höheren L*-Wert und Glanzgrad (60°) aufweist.

**3.** Mischung nach Anspruch 1 oder 2 **dadurch gekennzeichnet, dass**

a) die mittlere Partikelgröße der Pulverpartikel der Glasfritte vorzugsweise unter 1 $\mu$m liegt, besonders bevorzugt im Bereich 500-800 nm,
b) die mittlere Partikelgröße der Pulverpartikel des Pigments vorzugsweise unter 1 $\mu$m liegt, besonders bevorzugt im Bereich 200-600 nm,
c) die mittlere Partikelgröße der Pulverpartikel des Stabilisierungsadditivs vorzugsweise unter 1 $\mu$m liegt, besonders bevorzugt im Bereich 200-600 nm.

**4.** Mischung nach zumindest einem der vorgehenden Ansprüche **dadurch gekennzeichnet, dass** das Stabilisierungsadditiv Wolfram(VI)-oxid und zusätzlich $Bi_2O_3$ umfasst.

**5.** Mischung nach zumindest einem der vorhergehenden Ansprüche **dadurch gekennzeichnet, dass** die Glasfritte auf eine Glasfritte auf Basis von Silizium, Bor und Zink ist.

**6.** Mischung nach zumindest einem der vorgehenden Ansprüche **dadurch gekennzeichnet, dass** die Glasfritte einen Schmelzbereich zwischen etwa 600 und etwa 750, vorzugsweise zwischen 600 und 640 Grad aufweist.

**7.** Mischung nach zumindest einem der vorhergehenden Ansprüche **dadurch gekennzeichnet, dass** das Pigment auf Basis von nicht modifiziertem Bismutvanadat mit einem Funktionalisierungs-Agens bereitgestellt wird, wobei das Funktionalisierungs-Agens so ausgebildet ist, dass es das nicht modifizierte Bismutvanadat in einer Flüssigkeit zu dispergieren bzw. zu stabilisieren vermag.

**8.** Tinte, welche geeignet ist zum Auftragen auf ein Glassubstrat, wobei die Tinte beim Brennen mit dem Glassubstrat zumindest teilweise verschmelzen soll, umfassend:

A) Pulverpartikel einer Glasfritte
B) eine Flüssigkeit
C) ein Dispergiermittel
**dadurch gekennzeichnet, dass** die Tinte weiter
D) Pulverpartikel eines Pigments und Pulverpartikel eines Stabilisierungsadditivs umfasst,
wobei die Komponenten A) und D) einer Mischung nach zumindest einem der Ansprüche 1 bis 7 entspricht.

**9.** Tinte nach Anspruch 8 **dadurch gekennzeichnet, dass** die Tinte weiter einen Entschäumer, bevorzugt einen Entschäumer auf Siloxan-Basis, umfasst.

**10.** Tinte nach Anspruch 8 oder 9 **dadurch gekennzeichnet, dass** es sich bei der Tinte um eine Tintenstrahldrucktinte handelt.

**11.** Tinte nach zumindest einem der Ansprüche 8 bis 10 umfassend:

a) etwa 26 bis etwa 32 % Glasfritte, vorzugsweise etwa 29 bis etwa 30 %
b) etwa 38 bis etwa 48 % einer Flüssigkeit, vorzugsweise einer organischen Flüssigkeit
c) etwa 2 bis etwa 10 % eines Dispergiermittels, bevorzugt etwa 8 bis etwa 10 % eines Dispergiermittels, besonders bevorzugt ein Dispergiermittel auf Basis von Polyetherphosphat
d) etwa 13 bis etwa 15 % Pigment, vorzugsweise 15%
e) etwa 0,8 bis etwa 13 % Stabilisierungsadditiv, vorzugsweise etwa 0,8 bis etwa 7%

**12.** Tinte nach zumindest einem der Ansprüche 8 bis 11 **dadurch gekennzeichnet, dass** die Flüssigkeit folgende Komponenten umfasst:

a) 1,37-1,53 % Dipropylenglycolmonomethylether,
b) 16-27 % Dibasic Ester und

c) 18-20 % Propylenglycol-1-monomethylether-2-acetat

**13.** Verfahren zur Herstellung eines Glasartikels umfassend folgende Schritte:

I) Bereitstellen eines Glassubstrates
II) Bereitstellen einer Tinte nach einem der Ansprüche 8 bis 12
III) Auftragen der Tinte auf das Glassubstrat
IV) Brennen der Tinte unter Zufuhr von Wärmeenergie bei einer Temperatur oberhalb der Schmelztemperatur der Glasfritte für eine vorbestimmte Dauer, sodass nach Wiedererstarren der Glasfritte ein farbiger Glasartikel erzeugt wird, der gegenüber einem bei derselben Brenntemperatur und Brenndauer aus einer Mischung ohne Wolfram(VI)-oxid erzeugbaren Glasartikel sowohl einen höheren Gelb- und Grünanteil (+b*, -a*-Wert) als auch einen höheren L*-Wert und Glanzgrad (60°) aufweist.

**14.** Verfahren nach Anspruch 13 **dadurch gekennzeichnet, dass** der Auftrag in Schritt III) mittels einer Rakelvorrichtung oder Tintenstrahldrucker erfolgt.

**15.** Verfahren nach Anspruch 13 oder 14 **dadurch gekennzeichnet, dass** in Schritt III) die Mischung bei einer Temperatur von 670°C und einer Brenndauer von 4 Minuten gebrannt wird.

**16.** Verfahren nach Anspruch 15 **dadurch gekennzeichnet, dass** eine Mischung mit Massenverhältnis einer Glasfritte umfassend

| | | |
|---|---|---|
| i) etwa 21,4 bis etwa 36,6 %, | bevorzugt etwa 27,0 bis etwa 31,0 % | $SiO_2$ |
| ii) etwa 05,2 bis etwa 08,9 %, | bevorzugt etwa 06,6 bis etwa 07,6 % | $ZnO$ |
| iii) etwa 60,7 bis etwa 32,7%, | bevorzugt etwa 50,4 bis etwa 43,0 % | $B_2O_3$ |
| iv) etwa 08,5 bis etwa 14,6 %, | bevorzugt etwa 10,8 bis etwa 12,4 % | $Na_2O$ |
| v) etwa 01,1 bis etwa 2,0 %, | bevorzugt etwa 01,5 bis etwa 1,7 % | $TiO_2$ |
| vi) etwa 0,3 bis etwa 0,4 %, | bevorzugt etwa 0,3 bis etwa 0,4 % | $Al_2O_3$ |
| vii) etwa 02,2 bis etwa 03,8 %, | bevorzugt etwa 02,8 bis etwa 03,2 % | $F$ |
| viii) etwa 0,2 bis etwa 0,3 %, | bevorzugt etwa 0,3 % | $CaO$ |
| ix) etwa 0,4 bis etwa 0,6 %, | bevorzugt etwa 0,4 bis etwa 0,5 % | $ZrO_2$, |

zu Bismutvanadat von etwa 2:1 und Bismutvanadat zu Wolfram(VI)-oxid von etwa 17,9:1 bis zu etwa 1,06:1 bereitgestellt wird, wobei nach Schritt IV) ein Glasartikel erzeugt wird, der gegenüber ein aus einer Tinte ohne Stabilisierungsadditiv erzeugbaren Glasartikel einen Farbunterschied ∆E* von >35 und <44 und gleichzeitig einen Glanzwertunterschied (60°) von etwa >42 und <108,6 aufweist.

**17.** Verfahren nach Anspruch 16 **dadurch gekennzeichnet, dass** eine Mischung mit Massenverhältnis einer Glasfritte umfassend

| | | |
|---|---|---|
| i) etwa 21,4 bis etwa 36,6 %, | bevorzugt etwa 27,0 bis etwa 31,0 % | $SiO_2$ |
| ii) etwa 05,2 bis etwa 08,9 %, | bevorzugt etwa 06,6 bis etwa 07,6 % | $ZnO$ |
| iii) etwa 60,7 bis etwa 32,7%, | bevorzugt etwa 50,4 bis etwa 43,0 % | $B_2O_3$ |
| iv) etwa 08,5 bis etwa 14,6 %, | bevorzugt etwa 10,8 bis etwa 12,4 % | $Na_2O$ |
| v) etwa 01,1 bis etwa 2,0 %, | bevorzugt etwa 01,5 bis etwa 1,7 % | $TiO_2$ |
| vi) etwa 0,3 bis etwa 0,4 %, | bevorzugt etwa 0,3 bis etwa 0,4 % | $Al_2O_3$ |
| vii) etwa 02,2 bis etwa 03,8 %, | bevorzugt etwa 02,8 bis etwa 03,2 % | $F$ |
| viii) etwa 0,2 bis etwa 0,3 %, | bevorzugt etwa 0,3 % | $CaO$ |
| ix) etwa 0,4 bis etwa 0,6 %, | bevorzugt etwa 0,4 bis etwa 0,5 % | $ZrO_2$, |

zu Bismutvanadat von etwa 2:1 und Bismutvanadat zu Wolfram(VI)-oxid von etwa 17,9:1 bis zu etwa 2,1:1 bereitgestellt wird, wobei nach Schritt IV) ein Glasartikel erzeugt wird, der gegenüber ein aus einer Mischung ohne Stabilisierungsadditiv erzeugbaren Glasartikel eine Farbunterschied ∆E* von etwa >40 bis etwa 44 aufweist und gleichzeitig einen Glanzwertunterschied (60°) von etwa >104 und <108,6 aufweist.

**18.** Verfahren nach zumindest einem der vorhergehenden Ansprüche **dadurch gekennzeichnet, dass** nach Schritt I) und vor Schritt II) eine Trocknung der bedruckten Tinte auf der Glasplatte erfolgt, wobei die Trocknung derart erfolgt, dass die Tinte teilweise oder vollständig getrocknet wird und die Trocknung mittels eines IR und/oder NIR und\oder einem Heißluft-Trockner und/oder einen UV-Strahlungseinheit erfolgt.

**19.** Verfahren zur Herstellung einer Mischung für ein Brennverfahren folgende Schritte umfassend:

- Breitstellen von getrennt vorliegenden Komponenten einer zu mischenden Mischung, wobei eine erste Komponente Pulverpartikel einer Glasfritte umfasst, eine zweite Komponente Pulverpartikel mit Bismutvanadat umfasst und eine dritte Komponente Pulverpartikel von Wolfram(VI)-oxid umfasst, wobei Glasfritte, Bismutvanadat und Wolfram(VI)-oxid jeweils nur in einer der drei Komponenten umfasst sind.
- vor dem Brennen, mischen der ersten, zweiten und dritten Komponente.

**Claims**

**1.** Chemically stable mixture suitable for the production of fired colored glasses comprising prior to the firing process as components:

a) powder particles of a glass frit
b) powder particles of a pigment based on unmodified bismuth vanadate that is chemically unstable to the glass frit in the molten state,
c) powder particles of tungsten(VI) oxide as stabilizing additive,
wherein the mass ratio of glass frit to bismuth vanadate is in a range between about 1,96:1 and about 2:1 and the mass ratio of bismuth vanadate to tungsten(VI) oxide is in a range between about 18:1 and about 1:1, preferably in a range between about 18:1 and about 2:1, wherein as a glass frit a glass frit with mass ratios comprises:

| | | |
|---|---|---|
| i) about 21,4 to about 36,6 %, | preferably about 27,0 to about 31,0 % | $SiO_2$ |
| ii) about 05,2 to about 08,9 %, | preferably about 06,6 to about 07,6% | $ZnO$ |
| iii) about 60,7 to about 32,7%, | preferably about 50,4 to about 43,0 % | $B_2O_3$ |
| iv) about 08,5 to about 14,6%, | preferably about 10,8 to about 12,4 % | $Na_2O$ |
| v) about 01,1 to about 2,0 %, | preferably about 01,5 to about 1,7 % | $TiO_2$ |
| vi) about 0,3 to about 0,4 %, | preferably about 0,3 to about 0,4 % | $Al_2O_3$ |
| vii) about 02,2 to about 03,8 %, | preferably about 02,8 to about 03,2 % | F |
| viii) about 0,2 to about 0,3 %, | preferably about 0,3 % | CaO |
| ix) about 0,4 to about 0,6 %, | preferably about 0,4 to about 0,5 % | $ZrO_2$ |

**2.** Mixture according to claim 1 **characterized in that** by exposing the mixture to firing temperatures exceeding the melting temperature of the glass frit a colored glass can be generated that has, compared to a glass made at the same firing temperature and firing period from a mixture without tungsten(VI) oxide, both higher yellow and green components (+b*, -a* value) and higher L*-value and gloss level (60°).

**3.** Mixture according to one of the claims 1 or 2 **characterized in that**

a) the average particle size of the powder particles of the glass frit is preferably smaller than $1 \mu m$, particularly preferred in the range of 500-800 nm,
b) the average particle size of the powder particles of the pigment is preferably smaller than $1 \mu m$, particularly preferred in the range of 200-600 nm,
c) the average particle size of the powder particles of the stabilizing additive is preferably smaller than $1 \mu m$, particularly preferred in the range of 200-600 nm.

**4.** Mixture according to at least one of the preceding claims **characterized in that** the stabilizing additive comprises tungsten(VI) oxide and additionally $Bi_2O_3$.

**5.** Mixture according to at least one of the preceding claims **characterized in that** the glass frit is a glass frit based on silicon, boron and zinc.

**6.** Mixture according to at least one of the preceding claims **characterized in that** the glass frit has a melting range between about 600 and about 750, preferably between 600 and 640 degrees.

**7.** Mixture according to at least one of the preceding claims **characterized in that** the pigment based on unmodified bismuth vanadate is provided with a functionalization agent, wherein the functionalization agent is designed in such a way that it is able to disperse or stabilize the unmodified bismuth vanadate in a liquid.

**8.** Ink that is suitable to be applied onto a glass substrate, wherein the ink is designated to fuse at least partially during the firing procedure with the glass substrate, comprising:

> A) powder particles of a glass frit
> B) a liquid
> C) a dispersing agent
> **characterized in that** the ink further comprises
> D) powder particles of a pigment and powder particles of a stabilizing additive,
> wherein the components A) and D) of a mixture correspond to at least one of the claims 1 to 7.

**9.** Ink according to claim 8 **characterized in that** the ink further comprises a defoamer, preferably a defoamer based on siloxane.

**10.** Ink according to one of the claims 8 or 9 **characterized in that** the ink is an inkjet printing ink.

**11.** Ink according to at least one of the claims 8 to 10 comprising:

> a) about 26 to about 32 % of glass frit, preferably about 29 to about 30%
> b) about 38 to about 48 % of a liquid, preferably of an organic liquid
> c) about 2 to about 10 % of a dispersing agent, preferably about 8 to about 10 % of a dispersing agent, particularly preferred a dispersing agent based on polyether phosphate
> d) about 13 to about 15 % of pigment, preferably 15%
> e) about 0,8 to about 13 % of stabilizing additive, preferably about 0,8 to about 7 %.

**12.** Ink according to at least one of the claims 8 to 11 **characterized in that** the liquid comprises the following components:

> a) 1,37-1,53 % dipropylene glycol monomethyl ether
> b) 16-27 % dibasic ester and
> c) 18-20 % propylene glycol-1-monomethyl ether-2-acetate

**13.** Method for producing a glass article comprising the following steps:

> i) providing a glass substrate
> ii) providing an ink according to one of the claims 8 to 12
> iii) applying the ink onto the glass substrate
> iv) burning of the ink by inducing heat energy at a temperature above the melting temperature of the glass frit for a predetermined period so that after resolidification of the glass frit a colored glass article is generated that has, compared to a glass article made at the same firing temperature and firing period from a mixture without tungsten(VI) oxide, both higher yellow and green components (+b*, -a* value) and higher L*-value and gloss level (60°).

**14.** Method according to claim 13 **characterized in that** the application in step III) is carried out by means of a squeegee device or an inkjet printer.

**15.** Method according to one of the claims 13 or 14 **characterized in that** in step III) the mixture is fired at a temperature of 670° and a firing period of 4 minutes.

**16.** Method according to claim 15 **characterized in that** a mixture is provided with mass ratio of a glass frit comprising

| | | |
|---|---|---|
| i) about 21,4 to about 36,6 %, | preferred about 27,0 to about 31,0% | $SiO_2$ |
| ii) about 05,2 to about 08,9%, | preferred about 06,6 to about 07,6 % | $ZnO$ |
| iii) about 60,7 to about 32,7 %, | preferred about 50,4 to about 43,0 % | $B_3O_3$ |
| iv) about 08,5 to about 14,6 %, | preferred about 10,8 to about 12,4 % | $Na_2O$ |
| v) about 01,1 to about 2,0 %, | preferred about 01,5 to about 1,7 % | $TiO_2$ |
| vi) about 0,3 to about 0,4 %, | preferred about 0,3 to about 0,4 % | $Al_2O_3$ |
| vii) about 02,2 to about 03,8 %, | preferred about 02,8 to about 03,2 % | $F$ |
| viii) about 0,2 to about 0,3 %, | preferred about 0,3 % | $CaO$ |
| ix) about 0,4 to about 0,6 %, | preferred about 0,4 to about 0,5 % | $ZrO_2$ |

to bismuth vanadate of about 2:1 and bismuth vanadate to tungsten(VI) oxide of about 17,9:1 up to about 1,06:1 , wherein according to step IV) a glass article is produced that has, compared to a glass article produced from an ink without stabilizing additive, a color difference ΔE* of >35 and <44 and simultaneously a gloss value difference (60°) of about >42 and <108,6.

17. Method according to claim 16 **characterized in that** a mixture with mass ratio of a glass frit comprising

| | | |
|---|---|---|
| i) about 21,4 to about 36,6 %, | preferably about 27,0 to about 31,0 % | $SiO_2$ |
| ii) about 05,2 to about 08,9 %, | preferably about 06,6 to about 07,6 % | $ZnO$ |
| iii) about 60,7 to about 32,7 %, | preferably about 50,4 to about 43,0 % | $B_2O_3$ |
| iv) about 08,5 to about 14,6 %, | preferably about 10,8 to about 12,4 % | $Na_2O$ |
| v) about 01,1 to about 2,0 %, | preferably about 01,5 to about 1,7 % | $TiO_2$ |
| vi) about 0,3 to about 0,4 %, | preferably about 0,3 to about 0,4% | $Al_2O_3$ |
| vii) about 02,2 to about 03,8 %, | preferably about 02,8 to about 03,2 % | $F$ |
| viii) about 0,2 to about 0,3 %, | preferably about 0,3 % | $CaO$ |
| ix) about 0,4 to about 0,6 %, | preferably about 0,4 to about 0,5 % | $ZrO_2$ |

to bismuth vanadate of about 2:1 and bismuth vanadate to tungsten(VI) oxide of about 17,9:1 up to about 2,1:1, wherein according to step IV) a glass article is produced that has, compared to a glass article produced from a mixture without stabilizing additive, a color difference ΔE* of about >40 to about 44 and simultaneously a gloss value difference (60°) of about >104 and <108,6.

18. Method according to at least one of the preceding claims **characterized in that** after step I) and prior to step II) a drying of the printed ink takes place on the glass plate, wherein the drying takes place in such a manner that the ink is dried partially or completely and the drying takes place by means of an IR and/or NIR and/or hot air dryer and/or UV radiation unit.

19. Method for the production of a mixture for a firing method comprising the following steps:

- providing separate components of a mixture to be mixed, wherein a first component comprises powder particles of a glass frit, a second component comprises powder particles with bismuth vanadate and a third component comprises powder particles of tungsten(VI) oxide, wherein glass frit, bismuth vanadate and tungsten(IV) oxide are comprised each only in one of the three components.
- before the firing mixing the first, second and third component.

**Revendications**

1. Mélange chimiquement stable approprié pour la fabrication de verres colorés cuits comprenant avant un processus de cuisson comme composants:

a) des particules de poudre d'une fritte de verre
b) des particules de poudre d'un pigment à base de vanadate de bismuth non modifié qui est, comparé à la fritte de verre en état fondu, chimiquement instable,

c) des particules de poudre d'oxyde de tungstène (VI) comme additif de stabilisation,

le rapport de masse de la fritte de verre au vanadate de bismuth étant entre environ 1,96:1 et environ 2:1 et le rapport de masse du vanadate de bismuth à l'oxyde de tungstène (VI) étant entre environ 18:1 et environ 1:1, de préférence entre environ 18:1 et environ 2:1,
comme fritte de verre une fritte de verre avec des rapports de masse comprenant:

| | | |
|---|---|---|
| i) environ 21,4 à environ 36,6 %, | de préférence environ 27,0 à environ 31,0 % | $SiO_2$ |
| ii) environ 05,2 à environ 08,9 %, | de préférence environ 06,6 à environ 07,6 % | $ZnO$ |
| iii) environ 60,7 à environ 32,7 %, | de préférence environ 50,4 à environ 43,0 % | $B_2O_3$ |
| iv) environ 08,5 à environ 14,6 %, | de préférence environ 10,8 à environ 12,4 % | $Na_2O$ |
| v) environ 01,1 à environ 2,0 %, | de préférence environ 01,5 à environ 1,7 % | $TiO_2$ |
| vi) environ 0,3 à environ 0,4 %, | de préférence environ 0,3 à environ 0,4 % | $Al_2O_3$ |
| vii) environ 02,2 à environ 03,8 %, | de préférence environ 02,8 à environ 03,2 % | F |
| viii) environ 0,2 à environ 0,3 %, | de préférence environ 0,3 % | CaO |
| ix) environ 0,4 à environ 0,6 %, | de préférence environ 0,4 à environ 0,5 % | $ZrO_2$ |

2. Mélange selon la revendication 1 **caractérisé par le fait que** l'exposition du mélange aux températures de cuisson supérieures à la température de fusion de la fritte de verre permet de générer un verre coloré qui a, comparé à un verre produit à la même température de cuisson et durée de cuisson à partir d'un mélange sans oxyde de tungstène (VI), des teneurs en jaune et en vert plus élevées (valeur +b\*, -a\*) ainsi qu'une valeur L\* et un degré de brillance (60°) plus élevés.

3. Mélange selon l'une des revendications 1 ou 2 **caractérisée par le fait que** $\bar{a}$

a) la taille moyenne des particules de poudre de la fritte de verre est de préférence inférieure à 1 $\mu$m, de façon particulièrement préférée entre 500 et 800 nm,
b) la taille moyenne des particules de poudre du pigment est de préférence inférieure à 1 $\mu$m, de façon particulièrement préférée entre 200 et 600 nm,
c)) la taille moyenne des particules de poudre de l'additif de stabilisation est de préférence inférieure à 1 $\mu$m, de façon particulièrement préférée entre 200 et 600 nm.

4. Mélange selon du moins l'une des revendications précédentes **caractérisé par le fait que** l'additif de stabilisation comprend de l'oxyde de tungstène (VI) et additionellement $Bi_2O_3$.

5. Mélange selon du moins l'une des revendications précédentes **caractérisé par le fait que** la fritte de verre est une fritte de verre à base de silicium, bore et zinc.

6. Mélange selon du moins l'une des revendications précédentes **caractérisé par le fait que** la fritte de verre a une plage de fusion comprise entre environ 600 et environ 750, de préférence entre 600 et 640 degrés.

7. Mélange selon du moins l'une des revendications précédentes **caractérisé par le fait que** le pigment à base de vanadate de bismuth non modifié est fourni avec un agent de fonctionnalisation, l'agent de fonctionnalisation étant formé de sorte à pouvoir disperser ou stabiliser le vanadate de bismuth non modifié dans un liquide.

8. Encre qui est appropriée pour être appliquée sur un substrat de verre, l'encre étant destinée à fondre du moins partiellement pendant la cuisson avec le substrat de verre, comprenant:

A) des particules de poudre d'une fritte de verre
B) un liquide
C) un agent de dispersion
**caractérisé par le fait que** l'encre comprend en outre
D) des particules de poudre d'un pigment et des particules de poudre d'un additif de stabilisation,
les composants A) et D) d'un mélange correspondant à du moins l'une des revendications 1 à 7.

**9.** Encre selon la revendication 8 **caractérisée par le fait que** l'encre comprend en outre un agent antimousse, de préférence un agent antimousse à base de siloxane.

**10.** Encre selon l'une des revendications 8 ou 9 **caractérisée par le fait que** l'encre est une encre pour impression par jet d'encre.

**11.** Encre selon du moins l'une des revendications 8 à 10 comprenant:

a) environ 26 à environ 32% de fritte de verre, de préférence environ 29 à environ 30 %

b) environ 38 à environ 48 % d'un liquide, de préférence d'un liquide organique

c) environ 2 à environ 10% d'un agent de dispersion, de préférence environ 8 à environ 10 % d'un agent de dispersion, de façon particulièrement préférée un agent de dispersion à base de phosphate de polyéther

d) environ 13 à environ 15 % de pigment, de préférence 15 %

e) environ 0,8 à environ 13 % de l'additif de stabilisation, de préférence environ 0,8 à environ 7%.

**12.** Encre selon du moins l'une des revendications 8 à 11 **caractérisé par le fait que** le liquide comprend les composants suivants:

a) 1,37 -1,53 % dipropylène glycol monométhyléther,

b) 16-27 % dibasic ester et

c) 18-20 % propylène glycol-1-monométhyléther-2-acétate

**13.** Procédé de fabrication d'un article en verre comprenant les étapes suivantes:

I) fournir un substrat de verre

II) fournir une encre selon l'une des revendications 8 à 12

III) appliquer l'encre sur le substrat de verre

IV) cuire l'encre, tout en amenant de l'énergie thermique, à une température supérieure à la temperature de fusion de la fritte de verre pour une durée prédéterminée de sorte qu' après la resolidification de la fritte de verre un article en verre coloré est généré qui a, comparé à un article en verre produit à la même température de cuisson et durée de cuisson à partir d'un mélange sans oxyde de tungstène (VI), des teneurs en jaune et en vert plus élevées (valeur +b*, -a*) ainsi qu'une valeur L* et un degré de brillance (60°) plus élevés.

**14.** Procédé selon la revendication 13 **caractérisé par le fait que** l'application effectuée dans l'étape III) est exécutée à moyen d'un dispositif de racle ou d'une imprimante à jet d'encre.

**15.** Procédé selon l'une des revendications 13 ou 14 **caractérisé par le fait que** dans l'étape III) le mélange est cuit à une temperature de 670° et pendant une durée de cuisson de 4 minutes.

**16.** Procédé selon la revendication 15 **caractérisé par le fait qu'**un mélange est fourni avec un rapport de masse d'une fritte de verre comprenant

| | | |
|---|---|---|
| i) environ 21,4 à environ 36,6 %, | de préférence environ 27,0 à environ 31,0 % | $SiO_2$ |
| ii) environ 05,2 à environ 08,9 %, | de préférence environ 06,6 à environ 07,6 % | $ZnO$ |
| iii) environ 60,7 à environ 32,7 %, | de préférence environ 50,4 à environ 43,0 % | $B_2O_3$ |
| iv) environ 08,5 à environ 14,6 %, | de préférence environ 10,8 à environ 12,4 % | $Na_2O$ |
| v) environ 01,1 à environ 2,0 %, | de préférence environ 01,5 à environ 1,7 % | $TiO_2$ |
| vi) environ 0,3 à environ 0,4 %, | de préférence environ 0,3 à environ 0,4 % | $Al_2O_3$ |
| vii) environ 02,2 à environ 03,8 %, | de préférence environ 02,8 à environ 03,2 % | F |
| viii) environ 0,2 à environ 0,3 %, | de préférence environ 0,3 % | CaO |
| ix) environ 0,4 à environ 0,6 %, | de préférence environ 0,4 à environ 0,5 % | $ZrO_2$ |

au vanadate de bismuth d'environ 2:1 et du vanadate de bismuth à l'oxyde de tungstène (VI) d'environ 17,9:1 à environ 1,06:1, selon l'étape (IV) un article en verre étant généré qui, comparé à un article en verre produit à partir d'une encre sans additif de stabilization, a une différence de couleur ΔE* de >35 et <44 et simultanément une différence de la valeur de brillance (60°) d'environ >42 et <108,6.

**17.** Procédé selon la revendication 16 **caractérisé par le fait qu'**un mélange est fourni avec un rapport de masse d'une fritte de verre comprenant

| | | |
|---|---|---|
| i) environ 21,4 à environ 36,6 %, | de préférence environ 27,0 à environ 31,0 % | $SiO_2$ |
| ii) environ 05,2 à environ 08,9 %, | de préférence environ 06,6 à environ 07,6 % | $ZnO$ |
| iii) environ 60,7 à environ 32,7 %, | de préférence environ 50,4 à environ 43,0 % | $B_2O_3$ |
| iv) environ 08,5 à environ 14,6 %, | de préférence environ 10,8 à environ 12,4 % | $Na_2O$ |
| v) environ 01,1 à environ 2,0 %, | de préférence environ 01,5 à environ 1,7 % | $TiO_2$ |
| vi) environ 0,3 à environ 0,4 %, | de préférence environ 0,3 à environ 0,4 % | $Al_2O_3$ |
| vii) environ 02,2 à environ 03,8 %, | de préférence environ 02,8 à environ 03,2 % | $F$ |
| viii) environ 0,2 à environ 0,3 %, | de préférence environ 0,3 % | $CaO$ |
| ix) environ 0,4 à environ 0,6 %, | de préférence environ 0,4 à environ 0,5 % | $ZrO_2$ |

au vanadate de bismuth d'environ 2:1 et du vanadate de bismuth à l'oxyde de tungstène (VI) d'environ 17,9:1 à environ 2,1:1, selon l'étape IV) un article en verre étant généré qui, comparé à un article en verre produit à partir d'un mélange sans additif de stabilization, a une différence de couleur $\Delta E^*$ d'environ >40 à environ 44 et simultanément une différence de la valeur de brillance (60°) d'environ >104 et <108,6.

**18.** Procédé selon du moins l'une des revendications précédentes **caractérisé par le fait qu'**après l'étape I) et avant l'étape II) un séchage de l'encre imprimée a lieu sur la plaque de verre, le séchage ayant lieu de manière que l'encre soit séchée partiellement ou complètement et que le séchage ait lieu à moyen d'un IR et/ou NIR et/ou un sécheur à air chaud et/ou une unité d'irradiation UV.

**19.** Procédé de fabrication d'un mélange pour un procédé de cuisson comprenant les étapes suivantes:

- fournir des composants séparés d'un mélange à mélanger, un premier composant comprenant des particules de poudre d'une fritte de verre, un second composant comprenant des particules de poudre avec du vanadate de bismuth et un tiers composant comprenant des particules de poudre d'oxyde de tungstène (VI), la fritte de verre, le vanadate de bismuth et l'oxyde de tungstène (VI) n'étant compris chacun que dans un des trois composants.
- avant la cuisson mélanger le premier, le second et le tiers composant.

| Versuch | Brenn-bedingungen | | Flüssigkeit | | | Glasfritte | Dispergier-additiv | Pigment | Stabilisierungs-additiv | Verhältnis | Verhältnis | CIE-LAB-Farbwerte | | | |
|---|---|---|---|---|---|---|---|---|---|---|---|---|---|---|---|
| Nr. | T [°C] | t [min] | w(DPM) | w(DBE) | w(PMA) | F1 (VPA21102) | w(Tego dispers 656) | w(Durovan 5501) | w(WO₃) | w(WO₃)/ w(Durovan 5501) | w(Fritte)/ w(Durovan 5501) | L* | a* | b* | Glanz 60° |
| Referenz 1 | 670 | 4 | 0,0152 | 0,2877 | 0,1786 | 0,2925 | 0,0768 | 0,1492 | 0,0000 | 0,000 | 1,960 | 66,32 | -7,11 | 49,95 | 4,4 |
| 1 | 670 | 4 | 0,0153 | 0,2705 | 0,1825 | 0,2943 | 0,0789 | 0,1501 | 0,0084 | 0,056 | 1,960 | 80,03 | -13,47 | 91,04 | 111 |
| 2 | 670 | 4 | 0,0154 | 0,2507 | 0,1871 | 0,2964 | 0,0814 | 0,1512 | 0,0177 | 0,117 | 1,960 | 78,64 | -14,1 | 87,87 | 113 |
| 3 | 670 | 4 | 0,0152 | 0,2528 | 0,1864 | 0,2964 | 0,0813 | 0,1493 | 0,0223 | 0,150 | 1,985 | 79,1 | -14,28 | 88,41 | 112 |
| 4 | 670 | 4 | 0,0157 | 0,2082 | 0,1970 | 0,2964 | 0,0866 | 0,1541 | 0,0363 | 0,236 | 1,924 | 79,75 | -14,58 | 87,94 | 112 |
| 5 | 670 | 4 | 0,0150 | 0,2138 | 0,1949 | 0,2964 | 0,0865 | 0,1474 | 0,0533 | 0,361 | 2,011 | 81,25 | -14,86 | 89,16 | 109 |
| 6 | 670 | 4 | 0,0156 | 0,1581 | 0,2082 | 0,2964 | 0,0931 | 0,1530 | 0,0723 | 0,473 | 1,938 | 80,73 | -15,22 | 85,78 | 109 |
| 7 | 670 | 4 | 0,0151 | 0,1588 | 0,2074 | 0,2964 | 0,0935 | 0,1485 | 0,0857 | 0,577 | 1,997 | 80,99 | -14,75 | 86,4 | 89,3 |
| 8 | 670 | 4 | 0,0141 | 0,1605 | 0,2058 | 0,2964 | 0,0943 | 0,1382 | 0,1162 | 0,841 | 2,145 | 81,39 | -14,52 | 84,34 | 58,4 |
| 9 | 670 | 4 | 0,0137 | 0,1612 | 0,2052 | 0,2964 | 0,0946 | 0,1345 | 0,1272 | 0,945 | 2,204 | 80,36 | -14,8 | 80,6 | 46,5 |
| 10 | 670 | 4 | 0,0260 | 0,1322 | 0,2633 | 0,2988 | 0,0864 | 0,1518 | 0,0415 | 0,273 | 1,969 | 79,62 | -15,22 | 89,94 | N/A |
| 11 | 670 | 4 | 0,0308 | 0,1200 | 0,2896 | 0,2922 | 0,0838 | 0,1218 | 0,0618 | 0,507 | 2,398 | 78,28 | -16,38 | 80,25 | N/A |
| 12 | 670 | 4 | 0,0274 | 0,1313 | 0,2582 | 0,3618 | 0,0863 | 0,1009 | 0,0341 | 0,338 | 3,584 | 71,33 | -12,96 | 67,97 | N/A |
| 5a | 670 | 12 | 0,0150 | 0,2138 | 0,1949 | 0,2890 | 0,0865 | 0,1474 | 0,0533 | 0,361 | 1,960 | 81,81 | -14,96 | 61,39 | 106 |
| 5b | 670 | 30 | 0,0150 | 0,2138 | 0,1949 | 0,2890 | 0,0865 | 0,1474 | 0,0533 | 0,361 | 1,960 | 82,17 | -17,82 | 63,31 | N/A |
| 2a | 670 | 12 | 0,0154 | 0,2507 | 0,1871 | 0,2964 | 0,0814 | 0,1512 | 0,0177 | 0,117 | 1,960 | 79,88 | -11,88 | 65,12 | 91,6 |

Tabelle T1

| Versuche | Brenn-bedingungen | | Flüssigkeit | | | Glasfritte | Dispergier-additiv | Pigment | Stabilisierungsaditiv Additiv | Verhältnis | Verhältnis | CIE-LAB-Farbwerte | | | |
|---|---|---|---|---|---|---|---|---|---|---|---|---|---|---|---|
| Nr. | T [°C] | t [min] | w(DPM) | w(DBE) | w(PMA) | w(VPA21102) | w(Tego dispers 656) | w(Durovan 5501) | w(WO$_3$) | w(Bi2O3)/ w(Durovan 5501) | w(Fritte)/ w(Durovan 5501) | L* | a* | b* | Glanz 60° |
| 13 | 670 | 4 | 0,0153 | 0,2565 | 0,1870 | 0,2943 | 0,0800 | 0,1501 | 0,0169 | 0,112 | 1,960 | 63,67 | -11,43 | 65,87 | 66,9 |
| 14 | 670 | 4 | 0,0153 | 0,1569 | 0,2137 | 0,2952 | 0,0904 | 0,1550 | 0,0735 | 0,474 | 1,905 | 69,26 | -2,91 | 69,42 | 69,5 |
| 15 | 670 | 4 | 0,0153 | 0,1568 | 0,2141 | 0,2941 | 0,0903 | 0,1501 | 0,0794 | 0,529 | 1,960 | 65,39 | -3,36 | 55,84 | 55,9 |
| 16 | 670 | 4 | 0,0142 | 0,1579 | 0,2149 | 0,2730 | 0,0899 | 0,1393 | 0,1108 | 0,796 | 1,960 | 68,7 | -0,5 | 59,49 | 59,5 |
| 17 | 670 | 4 | 0,0115 | 0,1607 | 0,2168 | 0,2213 | 0,0891 | 0,1129 | 0,1877 | 1,662 | 1,960 | 74,21 | -1,5 | 55,52 | 55,5 |
| 18 | 670 | 4 | 0,0117 | 0,1601 | 0,2177 | 0,2257 | 0,0888 | 0,1008 | 0,1950 | 1,934 | 2,239 | 76,03 | -3,49 | 54,17 | 54,3 |
| 19 | 670 | 4 | 0,0104 | 0,1618 | 0,2176 | 0,1994 | 0,0887 | 0,1017 | 0,2204 | 2,167 | 1,960 | 74,96 | -4,1 | 46,36 | 46,5 |
| 20 | 670 | 4 | 0,0090 | 0,1633 | 0,2186 | 0,1726 | 0,0883 | 0,0880 | 0,2603 | 2,956 | 1,960 | 78,1 | -7,11 | 35,98 | 36,7 |
| 21 | 670 | 4 | 0,0072 | 0,1651 | 0,2200 | 0,1377 | 0,0877 | 0,0702 | 0,3121 | 4,443 | 1,960 | 79,5 | -7,45 | 16,41 | 18,0 |
| 22 | 670 | 4 | 0,0062 | 0,1660 | 0,2206 | 0,1202 | 0,0874 | 0,0613 | 0,3381 | 5,511 | 1,960 | 79,94 | -6,03 | 11,07 | 12,6 |

Tabelle T2

| Versuche | Brenn-bedingungen | | Flüssigkeit | | | Glasfritte | Dispergier-additiv | Pigment | Stabilisierungsadditiv\Additiv | | | | | Verhältnis | Verhältnis | CIE-LAB-Farbwerte | | | |
|---|---|---|---|---|---|---|---|---|---|---|---|---|---|---|---|---|---|---|---|
| Nr. | T [°C] | t [min] | w(DPM) | w(DBE) | w(PMA) | w(VPA21102) | w(Tego dispers 656) | w(Durovan 5501) | w(WO₃) | w(Bi₂O₃) | w(Al₂O₃) | w(BaSO₄) | w(ZrO₂) | w(Additiv)/ w(Durovan 5501) | w(Fritte)/ w(Durovan 5501) | L* | a* | b* | Glanz 60° |
| 23 | 670 | 4 | 0,0095 | 0,1636 | 0,2149 | 0,1829 | 0,0901 | 0,0933 | 0,0427 | 0,2030 | | - | - | 2,633 | 1,960 | 72,41 | 0,1 | 49,44 | 117 |
| 24 | 670 | 4 | 0,0124 | 0,1605 | 0,2135 | 0,2382 | 0,0906 | 0,1215 | 0,0336 | 0,1296 | | - | - | 1,343 | 1,960 | 72,23 | -1,66 | 59,99 | 118 |
| 25 | 670 | 4 | 0,0151 | 0,1579 | 0,2107 | 0,2914 | 0,0919 | 0,1486 | 0,0440 | 0,0403 | - | - | - | 0,567 | 1,960 | 79,56 | -13,11 | 82,02 | 115 |
| | | | | | | | | | | | | | | | | | | | |
| 26 | 670 | 4 | 0,0136 | 0,1757 | 0,215 | 0,26087098 | 0,0863 | 0,1483 | - | - | 0,1003 | - | - | 0,677 | 1,760 | 73,02 | -11 | 56,59 | 47,4 |
| 27 | 670 | 4 | 0,0154 | 0,1679 | 0,2146 | 0,29700265 | 0,0878 | 0,1500 | - | - | 0,0673 | - | - | 0,448 | 1,979 | 73,65 | -11,44 | 57,52 | 73,1 |
| | | | | | | | | | | | | | | | | | | | |
| 28 | 670 | 4 | 0,0179 | 0,153 | 0,2108 | 0,3276332 | 0,0921 | 0,1779 | - | - | - | 0,0206 | - | 0,116 | 1,842 | 72,82 | -10,37 | 56,39 | 18,9 |
| 29 | 670 | 4 | 0,0193 | 0,1476 | 0,2099 | 0,30790357 | 0,0941 | 0,1464 | - | - | - | 0,0748 | - | 0,511 | 2,103 | 69,45 | -10,44 | 49,71 | 95,5 |
| | | | | | | | | | | | | | | | | | | | |
| 30 | 670 | 4 | 0,0178 | 0,1536 | 0,2128 | 0,34198316 | 0,0915 | 0,1742 | - | - | - | - | 0,0080 | 0,046 | 1,963 | 71,08 | -9,64 | 52,14 | 37,6 |

Tabelle T3

**EP 3 144 284 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0492244 B1
- EP 0271813 B1
- WO 2006079616 A1
- US 5336312 A